# EUROPÄISCHE PATENTSCHRIFT

(11) **EP 2 111 417 B1**
(45) Veröffentlichungstag und Bekanntmachung des Hinweises auf die Patenterteilung: **30.11.2011**
(21) Anmeldenummer: 08701057.5
(22) Anmeldetag: 10.01.2008
(51) Int. Cl.: C08F 2/01, B01J 19/26, C08F 220/06

(54) **VERFAHREN ZUR HERSTELLUNG VON POLYMERPARTIKELN DURCH POLYMERISATION VON FLÜSSIGKEITSTROPFEN IN EINER GASPHASE**
METHOD FOR PRODUCING POLYMER PARTICLES BY THE POLYMERIZATION OF FLUID DROPS IN A GAS PHASE
PROCÉDÉ DE FABRICATION DE PARTICULES POLYMÈRES PAR POLYMÉRISATION DE GOUTTES DE LIQUIDE DANS UNE PHASE GAZEUSE

(30) Priorität: 16.01.2007 EP 07100591
(43) Veröffentlichungstag der Anmeldung: 28.10.2009
(73) Patentinhaber: BASF SE, 67056 Ludwigshafen (DE)
(72) Erfinder: LÖSCH, Dennis, 67122 Altrip (DE); KRÜGER, Marco, 68161 Mannheim (DE); DÜCKER, Carolin, Nadine, 67063 Ludwigshafen (DE); KARIM, Asif, 68159 Mannheim (DE); DAISS, Andreas, 67146 Deidesheim (DE); SPINDLER, Volker, 67317 Altleiningen (DE); BLEI, Stefan, 68163 Mannheim (DE); EHNES, Dieter, 67281 Kirchheim (DE); GAMPFER, Oliver, 55234 Hochborn (DE); REIMER, Dieter, 67112 Mutterstadt (DE); HEEGER, Michael, 67071 Ludwigshafen (DE)
(86) Internationale Anmeldenummer: PCT/EP2008/000133
(87) Internationale Veröffentlichungsnummer: WO 2008/086976

(56) Entgegenhaltungen:
- EP-A- 1 083 192
- EP-A- 1 721 661
- WO-A-98/37101
- DE-A1-102004 042 946
- JP-A- 2006 089 737
- US-A- 5 269 980

## Beschreibung

Die vorliegende Erfindung betrifft ein Verfahren zur Herstellung von Polymerpartikeln durch Polymerisation von Flüssigkeitstropfen in einer Gasphase, wobei eine Flüssigkeit, enthaltend mindestens ein Monomer, aus mindestens einer Zuführung mittels einer Vielzahl von Bohrungen in einen die Gasphase enthaltenden Reaktionsraum dosiert wird und dass das Verhältnis von Länge der Zuführung zu größtem Durchmesser der Zuführung im Bereich der Vielzahl von Bohrungen mindestens 10 beträgt und die Vielzahl von Bohningen in mindestens einer Reihe längs der Zuführung angeordnet sind, sowie eine Vorrichtung zur Durchführung des Verfahrens.

US 5,269,980 beschreibt ein Verfahren zur Polymerisation monodisperser Tropfenketten in einer umgebenden erwärmten Gasphase. Die Tropfenketten werden erzeugt, indem die zu polymerisierende Lösung durch eine Vielzahl von Bohrungen definierter Größe in einer kreisrunden Platte hindurchtritt.

Durch Polymerisation von Flüssigkeitstropfen in einer Gasphase können die Verfahrensschritte Polymerisation und Trocknung zusammengefasst werden. Zusätzlich kann die Partikelgröße durch geeignete Verfahrensführung in gewissen Grenzen eingestellt werden.

Aufgabe der vorliegenden Erfindung war die Bereitstellung eines verbesserten Verfahrens zur Herstellung von Polymerpartikeln durch Polymerisation von Flüssigkeitstropfen in einer die Tropfen umgebenden Gasphase.

Insbesondere war es eine Aufgabe der vorliegenden Erfindung ein Verfahren bereitzustellen, das Polymerpartikel mit homogenen Eigenschaften erzeugt.

Gelöst wurde die Aufgabe durch ein Verfahren zur Herstellung von Polymerpartikeln durch Polymerisation von Flüssigkeitstropfen in einer Gasphase, wobei eine Flüssigkeit, enthaltend mindestens ein Monomer, aus mindestens einer Zuführung (1) mittels einer Vielzahl von Bohrungen in einen die Gasphase enthaltenden Reaktionsraum dosiert wird, dadurch gekennzeichnet, dass das Verhältnis von Länge der Zuführung (1) zu größtem Durchmesser der Zuführung (1) im Bereich der Vielzahl von Bohrungen mindestens 10 beträgt und die Vielzahl von Bohningen in mindestens einer Reihe längs der Zuführung angeordnet sind.

Das Verhältnis von Länge der Zuführung (1) zu größtem Durchmesser der Zuführung (1) im Bereich der Vielzahl von Bohrungen beträgt vorzugsweise mindestens 50, besonders bevorzugt mindestens 100, ganz besonders bevorzugt mindestens 200.

Die Länge der Zuführung (1) im Bereich der Vielzahl von Bohrungen beträgt vorzugsweise von 0,5 bis 10 m, besonders bevorzugt von 1 bis 8 m, ganz besonders bevorzugt von 2 bis 5 m.

Der größte Innendurchmesser der Zuführung (1) im Bereich der Vielzahl von Bohrungen beträgt vorzugsweise von 1 bis 100 mm, besonders bevorzugt von 2,5 bis 50 mm, ganz besonders bevorzugt von 5 bis 25 mm.

Die Anordnung der Zuführungen (1) unterliegt keiner Beschränkung. Geeignete Zuführungen (1) sind beispielsweise Rohre, die waagerecht in den oberen Teil des Reaktionsraumes hineinragen. Die Rohre können gerade, gebogen oder spriralförmig sein.

In einer bevorzugten Ausführungsform der vorliegenden Erfindung führen mehrere Zuführungen (1) radial in den oberen Teil des Reaktionsraumes hinein.

Die Zuführungen (1) sind im Randbereich des Reaktionsraumes vorzugsweise frei von Bohrungen, d. h. die Bohrungen weisen einen ausreichenden Abstand zur Wand des Reaktionsraumes auf.

Die Vielzahl von Bohrungen ist in einer oder mehreren Reihen längs der Zuführung (1) angeordnet, besonders bevorzugt in mindestens zwei Reihen, ganz besonders bevorzugt in drei Reihen, wobei die Reihen mit den Bohrungen vorzugsweise gegeneinander versetzt angeordnet sind.

Der Durchmesser der Bohrungen beträgt vorzugsweise von 50 bis 1.000 µm, besonders bevorzugt von 75 bis 600 µm, ganz besonders bevorzugt von 100 bis 300 µm.

Der Abstand der Bohrungen beträgt vorzugsweise 1 bis 50 mm, besonders bevorzugt 2,5 bis 20 mm, ganz besonders bevorzugt 5 bis 8 mm, des Bohrungsdurchmessers.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrungen. Die Zuführungen (1) werden im Strömungsbereich des laminaren Strahlzerfalls betrieben, d. h. die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 200. Der Druckverlust über die Bohrung beträgt vorzugsweise von 0,1 bis 10 bar, besonders bevorzugt 0,2 bis 5 bar, ganz besonders bevorzugt 0,5 bis 3 bar. Ein zu hoher Druckverlust führt zum Versprühen der Flüssigkeit, d. h. zu polydispersen Tropfen. Ein zu niedriger Druckverlust, der im Bereich des Druckverlustes über die Zuleitung (1) selber liegt, führt zu deutlichen Unterschieden der Druckverluste über die Bohrungen entlang der Zuführung (1).

Die erzeugten Tropfen weisen einen mittleren Durchmesser von vorzugsweise 200 bis 800 µm, besonders bevorzugt von 300 bis 700 µm, ganz besonders bevorzugt von 400 bis 600 µm, auf, wobei der Tropfendurchmesser durch Lichtstreuung bestimmt werden kann und den volumengemittelten mittleren Durchmesser bedeutet.

Um höhere Durchsätze zu erreichen ist es notwendig die Anzahl der Bohrungen zu erhöhen. Beispielsweise beschreibt US 5,269,980 eine kreisrunde Vertropferplatte mit einer Vielzahl von Bohrungen, wobei sich ein Teil der Bohrungen am Rand und ein weiterer Teil der Bohrungen im Zentrum der Vertropferplatte befindet.

Der vorliegenden Erfindung liegt die Erkenntnis zugrunde, dass bei der Dosierung der Flüssigkeit über eine Vielzahl von Bohrungen die äußeren Tropfenketten die inneren Tropfenketten abschirmen. Dadurch werden die inneren Tropfenketten langsamer erwärmt, wodurch die Polymerisation der inneren Tropfenketten später startet und weniger Reaktionszeit zur Verfügung steht. Dieser Effekt wird insbesondere bei einer großtechnischen Umsetzung mit der hierbei notwendigen großen Anzahl an Bohrungen verstärkt, d. h. insbesondere bei der großtechnischen Umsetzung sind infolge unterschiedlicher Reaktionszeiten inhomogene Partikelmischungen zu erwarten.

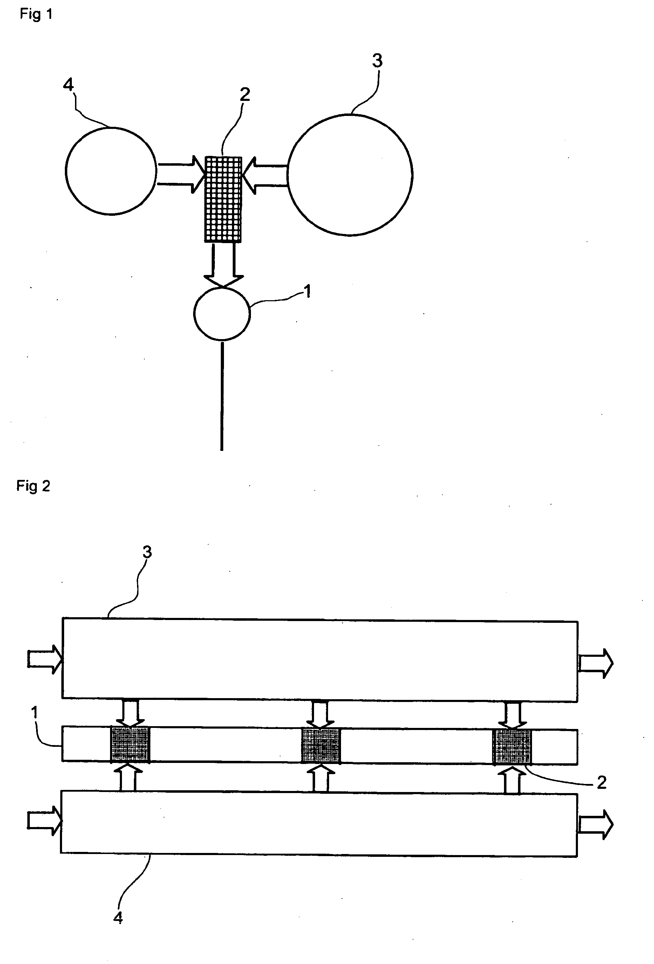

Die Abbildungen 1 und 2 zeigen eine Quer- und einen Längsschnitt einer bevorzugten Ausführungsform der vorliegenden Erfindung.

In dieser bevorzugten Ausführungsform gelangt die Flüssigkeit über mehrere Zuführungen (2) in die Zuführung (1). Die Abstand der Zuführungen (2) beträgt vorzugsweise 10 bis 50, besonders bevorzugt 20 bis 40, ganz besonders bevorzugt 25 bis 35 cm.

Die Verwendung mehrerer Zuführungen (2) führt zu optimierten Strömungsverhältnissen in der Zuführung (1), weniger Toträumen und einer verlängerten Standzeit.

Vorzugsweise gelangt die Flüssigkeit über eine Zuführung (3) und eine zweite Flüssigkeit, enthaltend mindestens einen Initiator, über eine Zuführung (4) in die Zuführung (2), wobei die Flüssigkeit und die zweite Flüssigkeit in der Zuführung (2) vorzugsweise mittels eines statischen Mischers gemischt werden.

Das Verhältnis von Länge der Zuführung (3) zu größtem Durchmesser der Zuführung (3) beträgt typischerweise mindestens 10, vorzugsweise mindestens 50, besonders bevorzugt mindestens 100, ganz besonders bevorzugt mindestens 200.

Die Länge der Zuführung (3) beträgt vorzugsweise von 0,5 bis 10 m, besonders bevorzugt von 1 bis 8 m, ganz besonders bevorzugt von 2 bis 5 m.

Der größte Innendurchmesser der Zuführung (3) beträgt vorzugsweise von 5 bis 200 mm, besonders bevorzugt von 10 bis 100 mm, ganz besonders bevorzugt von 20 bis 50 mm.

Die Zuführung (3) weist vorzugsweise einen einheitlichen Querschnitt auf. Kreisrunde Querschnitte sind besonders bevorzugt.

Das Verhältnis von Länge der Zuführung (4) zu größtem Durchmesser der Zuführung (4) beträgt typischerweise mindestens 10, vorzugsweise mindestens 50, besonders bevorzugt mindestens 100, ganz besonders bevorzugt mindestens 200.

Die Länge der Zuführung (4) beträgt vorzugsweise von 0,5 bis 10 m, besonders bevorzugt von 1 bis 8 m, ganz besonders bevorzugt von 2 bis 5 m.

Der größte Innendurchmesser der Zuführung (4) beträgt vorzugsweise von 2,5 bis 150 mm, besonders bevorzugt von 5 bis 75 mm, ganz besonders bevorzugt von 10 bis 50 mm.

Die Zuführung (4) weist vorzugsweise einen einheitlichen Querschnitt auf. Kreisrunde Querschnitte sind besonders bevorzugt.

Vorzugsweise wird mindestens eine der Zuführungen (1), (2), (3) und (4) gekühlt.

Diese Ausführungsform ermöglicht den Einsatz von Zuführungen (1) mit geringerem Durchmesser und geringerer Verweilzeit der Monomer und Initiator enthaltenden Mischung. Der größte Innendurchmesser der Zuführung (1) im Bereich der Vielzahl von Bohrungen beträgt vorzugsweise von 1 bis 50 mm, besonders bevorzugt von 3 bis 25 mm, ganz besonders bevorzugt von 5 bis 10 mm.

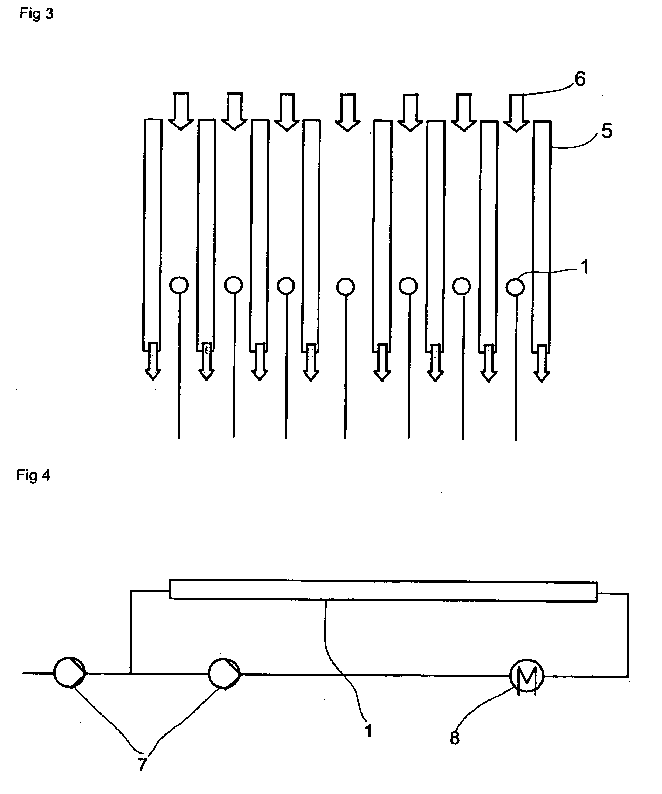

Die Abbildung 3 zeigt einen Querschnitt einer weiteren bevorzugten Ausführungsform der vorliegenden Erfindung.

In dieser weiteren bevorzugten Ausführungsform wird von oben Gas mit einer Temperatur von 90 bis 300 °C, vorzugsweise von 100 bis 250 °C, besonders bevorzugt von 120 bis 200 °C, ganz besonders bevorzugt von 150 bis 180 °C, mittels mindestens einer Gaszuführung (5) in den Reaktionsraum eingeleitet, wobei die mindestens eine Gaszuführung (5) unterhalb der Zuführung (1) endet.

Von oben kann Gas mit einer Temperatur von 0 bis 60 °C, vorzugsweise von 5 bis 50 °C, besonders bevorzugt von 10 bis 40 °C, ganz besonders bevorzugt von 20 bis 30 °C, mittels mindestens einer Gaszuführung (6) in den Reaktionsraum eingeleitet werden, wobei die mindestens eine Gaszuführung (6) oberhalb der Zuführung (1) endet.

Durch diese Maßnahmen wird eine unerwünschte Erwärmung der Zuführungen (1), (2), (3) und (4) vermieden.

Die Anordnung der Zuführungen und der Gaszuführungen unterliegt dabei keiner Beschränkung. Beispielsweise können vier Zuführungen (1) gerade in einen kreisrunden Reaktionsraum hineinragen, wobei die Zuführungen (1) gegeneinander um jeweils 90° versetzt sind und auf den Kreismittelpunkt weisen. Die Gaszuführungen (5) können dann die Form eines Kreissegmentes zwischen Reaktorwand und zweier Zuführungen (1) aufweisen.

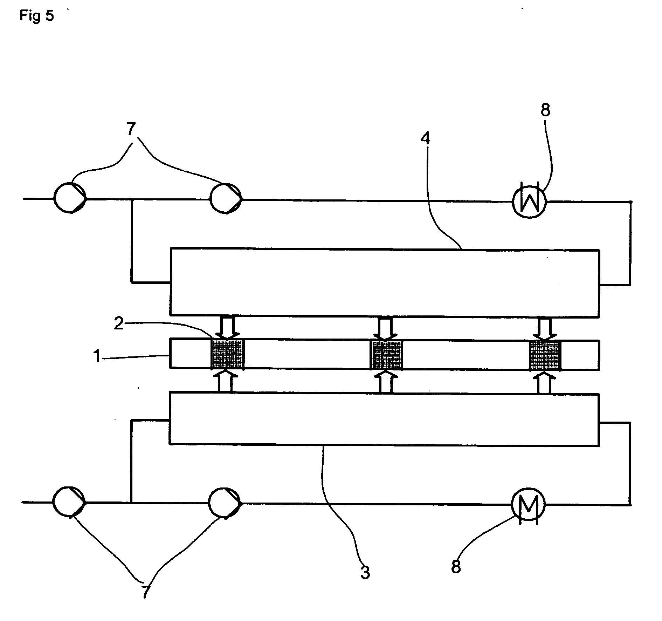

Die Abbildungen 4 und 5 zeigen Längsschnitte einer weiteren bevorzugten Ausführungsform der vorliegenden Erfindung.

In dieser weiteren bevorzugten Ausführungsform wird die Flüssigkeit in mindestens einer der Zuführungen (1), (3) und (4) teilweise über einen Kühler (8) im Kreis gefördert.

Dazu ist es selbstverständlich notwendig, dass beide Enden der Zuführungen (1), (3) und (4) aus dem Reaktionsraum herausragen.

Durch diese Maßnahmen kann eine unerwünschte Erwärmung der Zuführungen (1), (3) und (4) ebenfalls vermieden werden.

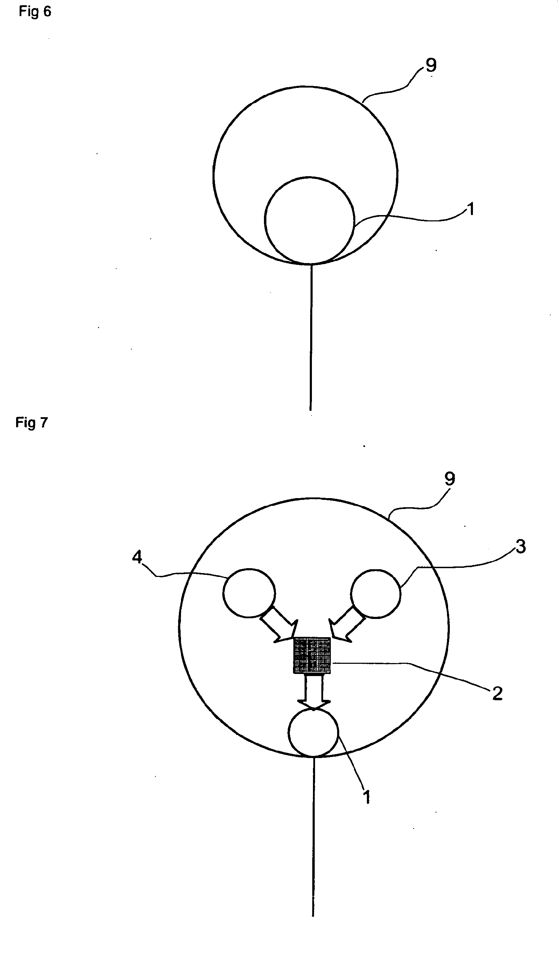

Die Abbildungen 6 und 7 zeigen Querschnitte einer weiteren bevorzugten Ausführungsform der vorliegenden Erfindung.

In dieser weiteren bevorzugten Ausführungsform weist mindestens eine der Zuführungen (1), (2), (3) und (4) einen Kühlmantel (9) auf, wobei der Kühlmantel (9) im Bereich der Vielzahl von Bohrungen unterbrochen ist.

Durch diese Maßnahmen kann eine unerwünschte Erwärmung der Zuführungen (1), (2), (3) und (4) ebenfalls vermieden werden.

Vorzugsweise wird mindestens eine der Zuführungen (1), (2), (3) und (4) zusätzlich thermisch isoliert.

Um die Kühlwirkung zu erhöhen sind selbstverständlich auch Kombinationen der bevorzugten Ausführungsformen möglich.

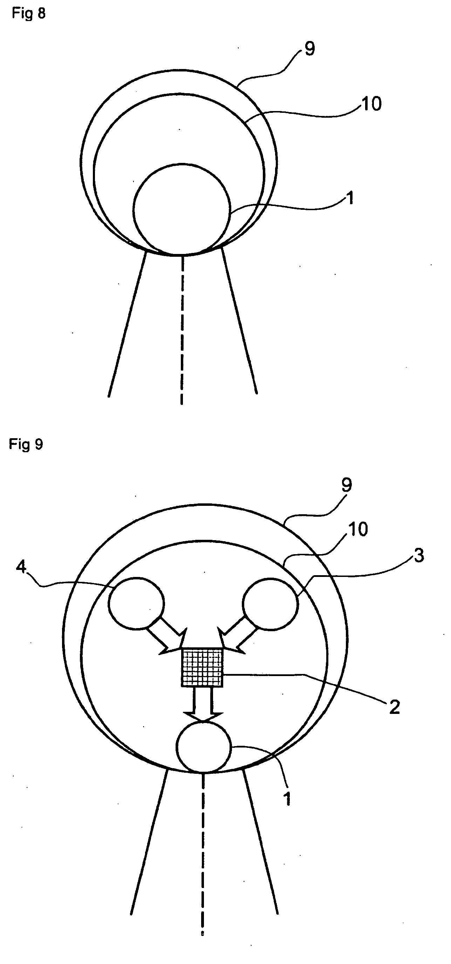

Die Abbildungen 8 und 9 zeigen Querschnitte einer weiteren bevorzugten Ausführungsform der vorliegenden Erfindung.

In dieser weiteren bevorzugten Ausführungsform wird mindestens eine der Zuführungen (1), (2), (3) und (4) von einer zusätzlichen Gasspülung (10) umgeben, wobei die Gasspülung (10) im Bereich der Vielzahl von Bohrungen unterbrochen ist.

Durch diese Maßnahmen kann ein Eindringen von Kreisgas durch Leckagen vermieden werden. Die Gasspülung (10) ist vorzugsweise von einem Kühlmantel (9) umgeben. Die Gasspülung (10) kann parallel zu der mindestens einen Reihe von Bohrungen zusätzliche Reihen von Bohrungen enthalten. Mittels dieser zusätzlichen Bohrungen kann das Spülgas zumindest teilweise in den Reaktionsraum geführt werden.

Die Zuführung (1) weist vorzugsweise einen einheitlichen Querschnitt auf. Kreisrunde Querschnitte sind besonders bevorzugt.

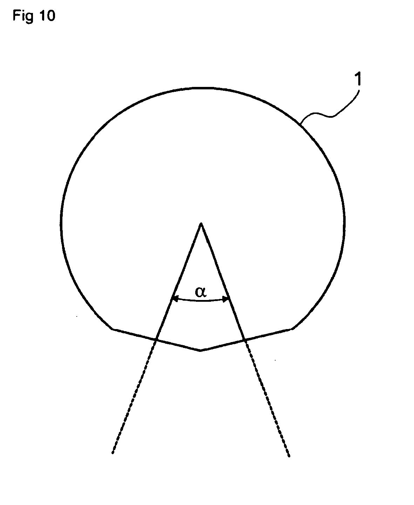

In einer weiteren bevorzugten Ausführungsform der vorliegenden Erfindung sind die Zuführungen (1) im Bereich der Bohrungen planar. Weist die Zuführung (1) in Längsrichtung mindestens zwei Reihen von Bohrungen auf, so umfassen die Zuführungen (1) im Bereich der Bohrungen vorteilhaft zwei planare Bereiche, wobei jeder planare Bereich mindestens eine Reihe von Bohrungen aufweist und sich die Senkrechten auf die beiden planaren Bereiche im Querschnitt der Zuführung (1) oberhalb der Bohrungen schneiden und einen Winkel (Knickwinkel α) einschließen. Der Knickwinkel α beträgt vorzugsweise 1 bis 90°, besonders bevorzugt 2 bis 60°, ganz besonders bevorzugt 3 bis 40°. Durch diese Anordnung wird die Verteilung der erzeugten Tropfen im Trägergas verbessert. Die Abbildung 10 zeigt ein Beispiel für eine derartige Anordung.

Die Zuführung (1) kann aber auch mehr als zwei planare Bereiche umfassen, beispielsweise drei oder vier planare Bereiche, wobei jeder planare Bereich mindestens eine Reihe von Bohrungen aufweist.

Die Zuführungen (1), (2), (3) und (4) sind vorzugsweise aus einem polymeren Werkstoff, beispielsweise Polyethylen, Polypropylen, Polyvinylchlorid, Polyvinylidenfluorid, Polyamid, Polytetrafluorethylen. Die Bohrungen können vorteilhaft mittels eines Lasers in das polymere Material gebrannt werden.

Das polymere Material weist gegenüber Wasser einen Kontaktwinkel von mindestens 60°, vorzugsweise mindestens 70°, besonders bevorzugt mindestens 80°, ganz besonders bevorzugt mindestens 90°, auf.

Der Kontaktwinkel ist ein Maß für das Benetzungsverhalten einer Flüssigkeit, insbesondere Wasser, gegenüber einer Oberfläche und kann mit üblichen Methoden bestimmt werden, beispielsweise gemäß ASTM D 5725 oder DIN 53900. Ein niedriger Kontaktwinkel bedeutet eine gute und ein hoher Kontaktwinkel eine schlechte Benetzung.

Die Zuführungen (1), (3) und (4) können beispielsweise mit einem Molch gereinigt werden. Es ist aber auch möglich die Vielzahl von Bohrungen von außen mittels einer Reinigungslösung, vorzugsweise Wasser, zu spülen. Vorteilhaft wird die Reinigungsdüse mittels eines Schlittens auf der Zuführung (1) geführt.

Insbesondere bei relativ kostengünstigen Zuführungen (1) aus polymeren Werkstoffen kann es aber günstiger sein die Zuführungen (1) bei laufendem Betrieb einzeln auszutauschen und verschmutzte Zuführungen (1) zu entsorgen.

Die Art der Monomeren und deren Konzentration in der Flüssigkeit unterliegen keiner Beschränkung. So ist es möglich Monomere in Substanz oder als Lösung in einem geeigneten Lösungsmittel, beispielsweise Methanol, Diethylether oder Wasser, zu polymerisieren. Vorzugsweise werden im erfindungsgemäßen Verfahren ethylenisch ungesättigte Monomere eingesetzt.

Ethylenisch ungesättigte Monomere sind beispielsweise ethylenisch ungesättigte C₃-C₆-Carbonsäuren. Bei diesen Verbindungen handelt es sich beispielsweise um Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalze dieser Säuren.

Weitere geeignete Monomere sind Acrylamidopropansulfonsäure, Vinylphosphonsäure und/oder Alkali- bzw. Ammoniumsalze der Vinylsulfonsäure, wobei Säuren entweder in nicht neutralisierter Form oder in partiell bzw. bis zu 100 % neutralisierter Form eingesetzt werden.

Weiterhin kommen monoethylenisch ungesättigte Sulfon- oder Phosphonsäuren als Monomere in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure.

Weitere geeignete Monomere sind beispielsweise Acrylamid, Methacrylamid, Crotonsäureamid, Acrylnitril, Methacrylnitril, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat sowie deren Quarternisierungsprodukte, beispielsweise mit Methylchlorid, Hydroxyethylacrylat, Hydroxyethylmethacrylat, Hydroxypropylacrylat und Hydroxypropylmethacrylat.

Weitere geeignete Monomere sind Monomere, die durch Umsetzung von stickstoffhaltigen Heterocyclen und/oder Carbonsäureamiden, wie Vinylimidazol, Vinylpyrazol sowie Vinylpyrrolidon, Vinylcaprolactam und Vinylformamid, mit Acetylen erhältlich sind, die auch quarternisiert sein können, beispielsweise mit Methylchlorid, und Monomere, die durch Umsetzung von stickstoffhaltigen Verbindungen, wie Diallyldimethylammoniumchlorid, mit Allylalkohol oder Allylchlorid erhältlich sind.

Desweiteren können auch Vinyl- und Allylester sowie Vinyl- und Allylether, wie Vinylacetat, Allylacetat, Methylvinylether und Methylallylether, als Monomere verwendet werden.

Die Monomeren können allein oder in Mischung untereinander eingesetzt werden, beispielsweise Mischungen, enthaltend zwei oder mehr Monomere.

Das erfindungsgemäße Verfahren eignet sich beispielsweise zur Herstellung wasserabsorbierender Polymerpartikel. Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die erzeugten Tropfen enthalten beispielsweise
a) mindestens ein ethylenisch ungesättigtes Monomer,
b) mindestens einen Vernetzer,
c) mindestens einen Initiator und
d) Wasser.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ).

Die Monomerlösung enthält vorzugsweise höchstens 160 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins.

Die Monomerlösung enthält vorzugsweise mindestens 0,1 Gew.-%, bevorzugt mindestens 0,2 Gew.-%, besonders bevorzugt mindestens 0,3 Gew.-%, ganz besonders bevorzugt mindestens 0,4 Gew.-%, Vernetzer b), jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die Polymerisationsinhibitoren können auch durch Absorption, beispielsweise an Aktivkohle, entfernt werden.

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b) und Initiator c).

Der Sauerstoffgehalt der Monomerlösung beträgt vorzugsweise mindestens 1 Gew.- ppm, besonders bevorzugt mindestens 2 Gew.-ppm, ganz besonders bevorzugt mindestens 5 Gew.-ppm. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Die Monomerlösung wird zur Polymerisation in die Gasphase dosiert. Der Sauerstoffgehalt der Gasphase beträgt vorzugsweise 0,001 bis 0,15 Vol.-%, besonders bevorzugt 0,002 bis 0,1 Vol.-%, ganz besonders bevorzugt 0,005 bis 0,05 Vol.-%.

Die Gasphase enthält neben Sauerstoff vorzugsweise nur inerte Gase, d.h. Gase, die unter Reaktionsbedingungen nicht in die Polymerisation eingreifen, beispielsweise Stickstoff und/oder Wasserdampf.

Der Polymerisationsreaktor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von unten nach oben. Vorzugsweise wird das Gas nach einem Durchgang zumindest teilweise, bevorzugt zu mindestens 50 %, besonders bevorzugt zu mindestens 75 %, als Kreisgas in den Reaktionsraum zurückgeführt. Üblicherweise wird eine Teilmenge des Trägergases nach jedem Durchgang ausgeschleust, vorzugsweise bis zu 10 %, besonders bevorzugt bis zu 3 %, ganz besonders bevorzugt bis zu 1 %.

Die Gasgeschwindigkeit wird vorzugsweise so eingestellt, dass die Strömung im Polymerisationsreaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Reaktionstemperatur beträgt bei der thermisch induzierten Polymerisation vorzugsweise 100 bis 250°C, besonders bevorzugt 120 bis 200°C, ganz besonders bevorzugt 150 bis 180°C.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5 °C oberhalb der Reaktorinnentemperatur liegt und die Kondensation an den Reaktorwänden zuverlässig vermieden wird.

Das Reaktionsprodukt kann dem Reaktor in üblicher Weise entnommen werden und wahlweise bis zur gewünschten Restfeuchte und zum gewünschten Restmonomerengehalt getrocknet werden.

Das Reaktionsprodukt wird vorzugsweise in mindestens einer Wirbelschicht getrocknet.

Die Polymerpartikel können zur weiteren Verbesserung der Eigenschaften nachvernetzt werden.

Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250 °C, bevorzugt 180 bis 220 °C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Das erfindungsgemäße Verfahren ermöglicht die Herstellung wasserabsorbierender Polymerpartikel mit gleichbleibenden Eigenschaften.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

Der mittlere Durchmesser der gemäß dem erfindungsgemäßen Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

Ein weiterer Gegenstand der vorliegenden Erfindung sind Vorrichtungen zur Durchführung des erfindungsgemäßen Verfahrens.

## Patentansprüche

1. Verfahren zur Herstellung von Polymerpartikeln durch Polymerisation von Flüssigkeitstropfen in einer Gasphase, wobei eine Flüssigkeit, enthaltend mindestens ein Monomer, aus mindestens einer Zuführung (1) mittels einer Vielzahl von Bohrungen in einen die Gasphase enthaltenden Reaktionsraum dosiert wird, **dadurch gekennzeichnet, dass** das Verhältnis von Länge der Zuführung (1) zu größtem Durchmesser der Zuführung (1) im Bereich der Vielzahl von Bohrungen mindestens 10 beträgt und die Vielzahl von Bohrungen in mindestens einer Reihe längs der Zuführung (1) angeordnet sind.

2. Verfahren gemäß Anspruch 1, **dadurch gekennzeichnet, dass** mehrere Zuführungen (1) radial in den oberen Teil des Reaktionsraumes hineinführen.

3. Verfahren gemäß Anspruch 1 oder 2, **dadurch gekennzeichnet, dass** die Vielzahl von Bohrungen in mindestens zwei Reihen längs der Zuführung (1) angeordnet sind.

4. Verfahren gemäß einem der Ansprüche 1 bis 3, **dadurch gekennzeichnet, dass** die Vielzahl von Bohrungen in mindestens zwei gegeneinander versetzten Reihen längs der Zuführung (1) angeordnet sind.

5. Verfahren gemäß einem der Ansprüche 1 bis 4, **dadurch gekennzeichnet, dass** die Zuführung (1) im Bereich der Bohrungen planar ist.

6. Verfahren gemäß einem der Ansprüche 1 bis 5, **dadurch gekennzeichnet, dass** die die Zuführung (1) in Längsrichtung mindestens zwei Reihen von Bohrungen und im Bereich der Bohrungen zwei planare Bereiche aufweist, wobei jeder planare Bereich mindestens eine Reihe von Bohrungen aufweist und sich die Senkrechten auf die beiden planaren Bereiche im Querschnitt der Zuführung (1) oberhalb der Bohrungen schneiden und einen Winkel einschließen.

7. Verfahren gemäß einem der Ansprüche 1 bis 6, **dadurch gekennzeichnet, dass** die Bohrungen einen Durchmesser von 50 bis 1.000 µm aufweisen.

8. Verfahren gemäß einem der Ansprüche 1 bis 7, **dadurch gekennzeichnet, dass** der Druck in der Zuleitung (1) mindestens 0,1 bar beträgt.

9. Verfahren gemäß einem der Ansprüche 1 bis 8, **dadurch gekennzeichnet, dass** die Flüssigkeit über mehrere Zuführungen (2) in die Zuführung (1) gelangt.

10. Verfahren gemäß Anspruch 9, **dadurch gekennzeichnet, dass** die Flüssigkeit über eine Zuführung (3) und eine zweite Flüssigkeit, enthaltend mindestens einen Initiator, über eine Zuführung (4) in die Zuführung (2) gelangen.

11. Verfahren gemäß Anspruch 10, **dadurch gekennzeichnet, dass** die Zuführungen (2) statische Mischer enthalten.

12. Verfahren gemäß einem der Ansprüche 1 bis 11, **dadurch gekennzeichnet, dass** mindestens eine der Zuführungen (1), (2), (3) und (4) gekühlt und/oder von einem separaten Gasstrom umspült wird.

13. Verfahren gemäß einem der Ansprüche 1 bis 12, **dadurch gekennzeichnet, dass** von oben Gas mit einer Temperatur von 90 bis 300°C mittels mindestens einer Gaszuführung (5) in den Reaktionsraum eingeleitet wird und die mindestens eine Gaszuführung (5) unterhalb der Zuführung (1) endet.

14. Verfahren gemäß Anspruch 13, **dadurch gekennzeichnet, dass** von oben Gas mit einer Temperatur von 0 bis 60°C mittels mindestens einer Gaszuführung (6) in den Reaktionsraum eingeleitet wird und die mindestens eine Gaszuführung (6) oberhalb der Zuführung (1) endet.

15. Verfahren gemäß einem der Ansprüche 12 bis 14, **dadurch gekennzeichnet, dass** die Flüssigkeit in mindestens einer der Zuführungen (1), (3) und (4) teilweise über einen Kühler (8) im Kreis gefördert wird.

16. Verfahren gemäß einem der Ansprüche 12 bis 15, **dadurch gekennzeichnet, dass** mindestens eine der Zuführungen (1), (2), (3) und (4) einen Kühlmantel (9) aufweist, wobei der Kühlmantel (9) im Bereich der Vielzahl von Bohrungen unterbrochen ist.

17. Verfahren gemäß einem der Ansprüche 1 bis 16, **dadurch gekennzeichnet, dass** mindestens eine der Zuführungen (1), (2), (3) und (4) zusätzlich thermisch isoliert ist.

18. Verfahren gemäß einem der Ansprüche 1 bis 17, **dadurch gekennzeichnet, dass** mindestens eine der Zuführungen (1), (2), (3) und (4) aus einem polymeren Werkstoff ist.

19. Verfahren gemäß einem der Ansprüche 1 bis 18, **dadurch gekennzeichnet, dass** Monomer zu mindestens 50 mol-% Acrylsäure ist.

20. Verfahren gemäß einem der Ansprüche 1 bis 19, **dadurch gekennzeichnet, dass** die Polymerpartikel eine Zentrifugenretentionskapazität von mindestens 15 g/g aufweisen.

21. Vorrichtung zur Durchführung eines Verfahrens gemäß einem der Ansprüche 1 bis 20.

## Claims

1. A process for producing polymer particles by polymerizing liquid droplets in a gas phase by metering a liquid comprising at least one monomer from at least one feed (1) by means of a multitude of bores into a reaction chamber comprising the gas phase, wherein the ratio of length of the feed (1) to greatest diameter of the feed (1) in the region of the multitude of bores is at least 10 and the multitude of bores is arranged in at least one row along the feed (1).

2. The process according to claim 1, wherein a plurality of feeds (1) lead radially into the upper part of the reaction chamber.

3. The process according to claim 1 or 2, wherein the multitude of bores is arranged in at least two rows along the feed (1).

4. The process according to any of claims 1 to 3, wherein the multitude of bores is arranged in at least two rows offset with respect to one another along the feed (1).

5. The process according to any of claims 1 to 4, wherein the feed (1) is planar in the region of the bores.

6. The process according to any of claims 1 to 5, wherein the feed (1) has at least two rows of bores in the longitudinal direction and, in the region of the bores, two planar regions, each planar region having at least one row of bores and the verticals to the two planar regions in the cross section of the feed (1) intersecting above the bores and forming an angle.

7. The process according to any of claims 1 to 6, wherein the bores have a diameter of from 50 to 1000 µm.

8. The process according to any of claims 1 to 7, wherein the pressure in the feed line (1) is at least 0.1 bar.

9. The process according to any of claims 1 to 8, wherein the liquid passes into the feed (1) through a plurality of feeds (2).

10. The process according to claim 9, wherein the liquid passes into the feed (2) through a feed (3), and a second liquid comprising at least one initiator through a feed (4).

11. The process according to claim 10, wherein the feeds (2) comprise static mixers.

12. The process according to any of claims 1 to 11, wherein at least one of the feeds (1), (2), (3) and (4) is cooled and/or a separate gas stream flows around it.

13. The process according to any of claims 1 to 12, wherein gas with a temperature of from 90 to 300°C is introduced from above into the reaction chamber by means of at least one gas feed (5) and the at least one gas feed (5) ends below the feed (1).

14. The process according to claim 13, wherein gas with a temperature of from 0 to 60°C is introduced from above into the reaction chamber by means of at least one gas feed (6) and the at least one gas feed (6) ends above the feed (1).

15. The process according to any of claims 12 to 14, wherein the liquid is conveyed in circulation in at least one of the feeds (1), (3) and (4) partly via a cooler (8).

16. The process according to any of claims 12 to 15, wherein at least one of the feeds (1), (2), (3) and (4) has a cooling jacket (9), the cooling jacket (9) being interrupted in the region of the multitude of bores.

17. The process according to any of claims 1 to 16, wherein at least one of the feeds (1), (2), (3) and (4) is additionally thermally insulated.

18. The process according to any of claims 1 to 17, wherein at least one of the feeds (1), (2), (3) and (4) is composed of a polymeric material.

19. The process according to any of claims 1 to 18, wherein monomer is acrylic acid to an extent of at least 50 mol%.

20. The process according to any of claims 1 to 19, wherein the polymer particles have a centrifuge retention capacity of at least 15 g/g.

21. An apparatus for performing the process according to any of claims 1 to 20.

## Revendications

1. Procédé de fabrication de particules polymères par polymérisation de gouttes liquides dans une phase gazeuse, un liquide qui contient au moins un monomère étant introduit dans une chambre réactionnelle qui contient la phase gazeuse à partir d'au moins une conduite d'alimentation (1) par une pluralité d'alésages, **caractérisé en ce que** le rapport entre la longueur de la conduite d'alimentation (1) et le diamètre maximal de la conduite d'alimentation (1) dans la zone de la pluralité d'alésages est d'au moins 10 et la pluralité d'alésages sont agencés en au moins une ligne le long de la conduite d'alimentation (1).

2. Procédé selon la revendication 1, **caractérisé en ce que** plusieurs conduites d'alimentation (1) entrent radialement dans la partie supérieure de la chambre réactionnelle.

3. Procédé selon la revendication 1 ou 2, **caractérisé en ce que** la pluralité d'alésages sont agencés en au moins deux lignes le long de la conduite d'alimentation (1).

4. Procédé selon l'une quelconque des revendications 1 à 3, **caractérisé en ce que** la pluralité d'alésages sont agencés en au moins deux lignes décalées l'une par rapport à l'autre le long de la conduite d'alimentation (1).

5. Procédé selon l'une quelconque des revendications 1 à 4, **caractérisé en ce que** la conduite d'alimentation (1) est plane dans la zone des alésages.

6. Procédé selon l'une quelconque des revendications 1 à 5, **caractérisé en ce que** la conduite d'alimentation (1) comprend au moins deux lignes d'alésages dans la direction longitudinale et deux zones planes dans la zone des alésages, chaque zone plane comprenant au moins une ligne d'alésages et les perpendiculaires aux deux zones planes s'intersectant dans la section de la conduite d'alimentation (1) au-dessus des alésages et formant un angle.

7. Procédé selon l'une quelconque des revendications 1 à 6, **caractérisé en ce que** les alésages présentent un diamètre de 50 à 1 000 µm.

8. Procédé selon l'une quelconque des revendications 1 à 7, **caractérisé en ce que** la pression dans la conduite d'alimentation (1) est d'au moins 0,1 bar.

9. Procédé selon l'une quelconque des revendications 1 à 8, **caractérisé en ce que** le liquide atteint la conduite d'alimentation (1) par plusieurs conduites d'alimentation (2).

10. Procédé selon la revendication 9, **caractérisé en ce que** le liquide atteint la conduite d'alimentation (2) par une conduite d'alimentation (3) et un second liquide, contenant au moins un initiateur, par une conduite d'alimentation (4).

11. Procédé selon la revendication 10, **caractérisé en ce que** les conduites d'alimentation (2) contiennent des mélangeurs statiques.

12. Procédé selon l'une quelconque des revendications 1 à 11, **caractérisé en ce qu'**au moins une des conduites d'alimentation (1), (2), (3) et (4) est refroidie et/ou baignée par un courant gazeux séparé.

13. Procédé selon l'une quelconque des revendications 1 à 12, **caractérisé en ce qu'**un gaz ayant une température de 90 à 300°C est introduit dans la chambre réactionnelle par le haut par au moins une conduite d'alimentation de gaz (5) et la ou les conduites d'alimentation de gaz (5) finissent en dessous de la conduite d'alimentation (1).

14. Procédé selon la revendication 13, **caractérisé en ce qu'**un gaz ayant une température de 0 à 60°C est introduit dans la chambre réactionnelle par le haut par au moins une conduite d'alimentation de gaz (6) et la ou les conduites d'alimentation de gaz (6) finissent au-dessus de la conduite d'alimentation (1).

15. Procédé selon l'une quelconque des revendications 12 à 14, **caractérisé en ce que** le liquide dans au moins une des conduites d'alimentation (1), (3) et (4) est partiellement mis en circulation dans un circuit passant par un refroidisseur (8).

16. Procédé selon l'une quelconque des revendications 12 à 15, **caractérisé en ce qu'**au moins une des conduites d'alimentation (1), (2), (3) et (4) comprend une enveloppe de refroidissement (9), l'enveloppe de refroidissement (9) étant interrompue dans la zone de la pluralité d'alésages.

17. Procédé selon l'une quelconque des revendications 1 à 16, **caractérisé en ce qu'**au moins une des conduites d'alimentation (1), (2), (3) et (4) est également isolée thermiquement.

18. Procédé selon l'une quelconque des revendications 1 à 17, **caractérisé en ce qu'**au moins une des conduites d'alimentation (1), (2), (3) et (4) est en un matériau polymère.

19. Procédé selon l'une quelconque des revendications 1 à 18, **caractérisé en ce que** le monomère est de l'acide acrylique à hauteur d'au moins 50 % en moles.

20. Procédé selon l'une quelconque des revendications 1 à 19, **caractérisé en ce que** les particules polymères présentent une capacité de rétention centrifuge d'au moins 15 g/g.

21. Dispositif pour la réalisation d'un procédé selon l'une quelconque des revendications 1 à 20.
